# EUROPÄISCHE PATENTSCHRIFT

(11) **EP 3 303 864 B1**
(45) Veröffentlichungstag und Bekanntmachung des Hinweises auf die Patenterteilung: **10.07.2019**
(21) Anmeldenummer: 16726767.3
(22) Anmeldetag: 03.05.2016
(51) Int. Cl.: F16D 13/75

(54) **REIBUNGSKUPPLUNG**
FRICTION CLUTCH
EMBRAYAGE À FRICTION

(30) Priorität: 08.06.2015 DE 102015210411
(43) Veröffentlichungstag der Anmeldung: 11.04.2018
(73) Patentinhaber: Schaeffler Technologies AG & Co. KG, 91074 Herzogenaurach (DE)
(72) Erfinder: SCHNEIDER, Michael, 76534 Baden-Baden (DE)
(86) Internationale Anmeldenummer: PCT/DE2016/200205
(87) Internationale Veröffentlichungsnummer: WO 2016/198053

(56) Entgegenhaltungen:
- DE-A1- 19 941 208
- US-A1- 2003 062 237
- US-A1- 2006 116 232

## Beschreibung

Die Erfindung betrifft eine Reibungskupplung zum Kuppeln einer Antriebswelle eines Kraftfahrzeugmotors mit mindestens einer Getriebeeingangswelle eines Kraftfahrzeuggetriebes gemäß dem Oberbegriff des Patentanspruchs 1.

Reibungskupplungen können zum Ausgleich eines auftretenden Verschleißes von Kupplungsscheiben mit einer Nachstelleinrichtung versehen sein. Solche Nachstelleinrichtungen dienen gleichzeitig zum Ermitteln des Verschleißes der Reibungskupplung. Bei einer normal-eingedrückten Kupplungsvorrichtung, die nicht mit einer Nachstelleinrichtung versehen ist, kann es im Servicefall nicht einfach geprüft werden, ob die Kupplungsscheibe bereits verschlissen ist. Eine normal-eingedrückte Kupplungsvorrichtung ist mit einem Deckelbauteil, einer Gegenplatte und einer durch eine Tellerfeder in axialer Richtung der Kupplungsvorrichtung begrenzt verlagerbaren Anpressplatte zur reibschlüssigen Klemmung einer Kupplungsscheibe zwischen der Gegenplatte und der Anpressplatte versehen. Das Deckelbauteil weist mehrere Laschenabschnitte auf, durch die die Tellerfeder unter Zwischenlage zweier Drahtringe am Deckelbauteil verkippbar befestigt ist. Das Deckelbauteil kann durch einen Abstandsbolzen an der Gegenplatte vernietet oder verschraubt sein. Um den Verschleißzustand der normal-eingedrückte Kupplungsvorrichtung zu prüfen, muss der Abstandsbolzen abgebohrt werden und die Kupplungsvorrichtung auseinandergenommen werden. Nach Kontrolle müsste die Kupplungsvorrichtung dann wieder vernietet werden. Bei Varianten mit verschraubbaren Abstandsbolzen statt vernieteten Abstandsbolzen bleibt neben den Arbeitsaufwand zur Kontrolle zusätzlich noch die Aufgabe, die Kupplungsscheibe bei Wiedermontage genau zu zentrieren.

Eine Reibungskupplung, die auf den Oberbegriff des Patentanspruchs 1 lesbar ist, ist aus der DE 199 41 208 A1 bekannt.

Es besteht ein ständiges Bedürfnis den Verschleißzustand der Kupplungsscheiben einer Reibungskupplung durch eine einfache und zuverlässige Lösung zu überprüfen.

Es ist die Aufgabe der Erfindung eine Reibungskupplung zu schaffen, die ermöglicht, den Verschleißzustand der Kupplungsscheiben durch eine einfache und zuverlässige Lösung zu überprüfen.

Die Lösung der Aufgabe erfolgt erfindungsgemäß durch eine Reibungskupplung mit den Merkmalen des Patentanspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Erfindungsgemäß ist eine Reibungskupplung zum Kuppeln einer Antriebswelle eines Kraftfahrzeugmotors mit mindestens einer Getriebeeingangswelle eines Kraftfahrzeuggetriebes vorgesehen mit einem Kupplungsdeckel, einer an dem Kupplungsdeckel befestigten Gegenplatte, einer relativ zur Gegenplatte axial verlagerbaren Anpressplatte zum reibschlüssigen Verpressen einer Kupplungsscheibe zwischen der Gegenplatte und der Anpressplatte, einem an dem Kupplungsdeckel kippbar gelagerten Betätigungselement zur Verlagerung der Anpressplatte und einer ein Referenzzeichen und einen Prüfzeiger aufweisenden Prüfeinrichtung zum Überprüfen des Verschleißzustandes der Kupplungsscheibe, wobei der Verschleißzustand der Kupplungsscheibe mit Hilfe der Prüfeinrichtung von außen der zusammengebauten Reibungskupplung visuell überprüfbar ist.

Beim Verschleiß der Kupplungsscheibe kann die Anpressplatte in einem Schließvorgang der Reibungskupplung von dem beispielsweise als Tellerfeder ausgebildeten Betätigungselement weiter zu der Gegenplatte gedrückt werden. Demzufolge verändert sich die relative Stellung der Anpressplatte zu der Gegenplatte beim Verschleiß der Kupplungsscheibe im Schließzustand der Reibungskupplung. Ein Verschleiß der Kupplungsscheibe kann somit durch eine Ermittlung der Veränderung der relativen Stellung der Anpressplatte zu der Gegenplatte erkannt werden. Erfindungsgemäß kann die relative Stellung der Anpressplatte zu der Gegenplatte mit Hilfe von der relativen Stellung des Referenzzeichens zu dem Prüfzeiger dargestellt werden. Erfindungsgemäß ist das Referenzzeichen auf die Gegenplatte und der Prüfzeiger auf die Anpressplatte oder das Referenzzeichen auf die Anpressplatte und der Prüfzeiger auf die Gegenplatte aufgebracht werden. Demzufolge kann der Verschleißzustand der Kupplungsscheibe durch die relative Stellung des Referenzzeichens zu dem Prüfzeiger angezeigt werden. Erfindungsgemäß sind das Referenzzeichen und der Prüfzeiger von außen der Reibungskupplung sichtbar, wodurch der Verschleißzustand der Kupplungsscheibe von außen der zusammengebauten Reibungskupplung leicht ermittelt werden kann. Dadurch kann der Verschleißzustand der Kupplungsscheiben durch eine einfache und zuverlässige Lösung überprüft werden.

Insbesondere kann das Referenzzeichen aus mehreren in Axialrichtung voneinander beabstandeten Strichen ausgebildet sein, wobei die Striche jeweils einem Zustand der Kupplungsscheibe zugeordnet sind. Die Striche können beispielsweise parallel zueinander angeordnet sein. Es ist auch möglich, dass das Referenzzeichen aus anderen Formen, wie z.B. aus mehreren voneinander beabstandeten Punkten oder Ziffern ausgebildet werden kann.

Vorzugsweise kann das Referenzzeichen einen Strich aufweisen, der einem maximalen Verschleißzustand der Kupplungsscheibe zugeordnet ist. Wenn die Kupplungsscheibe den maximalen Verschleißzustand erreicht, werde der Prüfzeiger auf diesem Strich zeigen. Insbesondere kann das Referenzzeichen weitere Striche aufweisen, wie z.B. einen Strich, der dem Neuzustand der Reibungskupplung zugeordnet ist. Möglicherweise kann das Referenzzeichen auch mit mehreren Zwischenstrichen versehen sein, die jeweils einem Grad des Verschleißzustandes der Kupplungsscheibe zugeordnet sind, wodurch eine Skala für den Verschleißzustand der Kupplungsscheibe ausgebildet werden kann. Demzufolge kann der Verschleißzustand der Kupplungsscheibe vor dem Erreichen ihres maximalen Verschleißzustandes schrittweise beobachtet werden. Dadurch kann ein Kontroller die verbleibende Lebensdauer der Kupplungsscheibe jedes Mal beim Verschleißkontrollen voraussichtlich schätzen.

Das Referenzzeichen ist an der Gegenplatte angeordnet. An dieser Stelle sei hervorgehoben, dass das Referenzzeichen an einem Bauteil fixiert sein soll, das relativ zu der Gegenplatte nicht bewegbar ist. Beispielsweise kann die Gegenplatte in ihrem Umfang mit mehreren in Axialrichtung abstehenden Vorsprüngen versehen. Das Referenzzeichen kann beispielsweise auf der Außenseite des Vorsprungs der Gegenplatte angeordnet sein. Es ist auch möglich, dass das Referenzzeichen an einer anderen Stelle der Gegenplatte angeordnet ist, die von außen der Reibungskupplung sichtbar ist.

Erfindungsgemäß ist die Gegenplatte durch ein Abstandselement an dem Kupplungsdeckel befestigt. Das Referenzzeichen ist an einer Stelle des Abstandselements angeordnet. Die Stelle, woran das Referenzzeichen angeordnet ist, soll so ausgewählt werden, dass das Referenzzeichen zumindest in einem Zustand (wie z.B. Neuzustand oder maximalem Verschleißzustand) der Kupplungsscheibe von außen der Reibungskupplung sichtbar ist. Beispielsweise kann das Abstandselement als Abstandsbolzen ausgebildet sein. Der Abstandsbolzen kann beispielsweise durch Vernieten oder Schrauben an dem Kupplungsdeckel und der Gegenplatte befestigt werden, wodurch keine relative Bewegung zwischen der Gegenplatte und dem Abstandsbolzen stattfindet. Die relative Stellung der Gegenplatte zu der Anpressplatte kann somit durch die relative Stellung des Abstandsbolzens zu der Anpressplatte dargestellt werden.

In vorteilhafter Weiterbildung der Erfindung ist vorgesehen, dass die Anpressplatte mit einem in Axialrichtung der Reibungskupplung abstehenden Außenabschnitt versehen sein kann, der sich außerhalb des Kupplungsdeckels befindet, wobei der Prüfzeiger an dem Außenabschnitt der Anpressplatte angeordnet ist. Beispielsweise kann der Prüfzeiger einteilig mit dem Außenschnitt der Anpressplatte ausgebildet sein, wodurch eine Befestigung des Prüfzeigers an dem Außenabschnitt der Anpressplatte eingespart werden kann. Es ist ebenfalls möglich, dass der Prüfzeiger an einem anderen Bauteil der Reibungskupplung fixiert ist, das relativ zu der Anpressplatte nicht bewegbar ist.

Vorteilhaft kann der Außenabschnitt der Anpressplatte ein freies Ende aufweisen, wobei das freies Ende als Prüfzeiger ausgestaltet ist. Dadurch kann ein zusätzlicher Prüfzeiger eingespart werden. Der Prüfzeiger kann beispielsweise so eingestellt werden, dass der Prüfzeiger beim Verschleiß der Kupplungsscheibe auf einen bestimmten Strich des Referenzzeichens zeigt. Alternativ kann der Prüfzeiger derart eingestellt werden, dass ein bestimmter Strich des Referenzzeichens, welcher bei unverschlissenen Zuständen der Kupplungsscheibe von außen der Reibungskupplung sichtbar ist, beim Verschleiß der Kupplungsscheibe von dem Prüfzeiger visuell abgedeckt ist.

In vorteilhafter Weiterbildung der Erfindung ist ferner vorgesehen, dass der Prüfzeiger als Prüffenster ausgebildet sein kann. Das Prüffenster kann in dem Außenabschnitt der Anpressplatte angeordnet sein. Beispielsweise kann das Prüffenster aus einer Durchbohrung oder einer durchlaufenden Aussparung des Außenschnittes der Anpressplatte ausgebildet sein. Die Stelle des Prüffensters kann beispielsweise so festgelegt werden, dass nur beim Verschleiß der Kupplungsscheibe ein bestimmter Strich des Referenzeichens von außen der Reibungskupplung durch das Prüffenster visuell aufgenommen werden kann. Alternativ kann das Referenzzeichen mehrere Striche aufweisen, die jeweils einem bestimmten Zustand (wie z.B. Neuzustand, leichtem Verschleißzustand oder maximalem Verschleißzustand) der Kupplungsscheibe zugeordnet sind. Zum Kotrollieren des Zustandes der Kupplungsscheibe kann bei jedem Zustand nur der diesem Zustand zugeordnete Strich durch das Prüffenster sichtbar sein. In diesem Fall sollten die Striche zur Identifizierung von den verschiedenen Zuständen der Kupplungsscheibe unterschiedlich ausgebildet sein. Beispielsweise können die Striche mit unterschiedlichen Breiten oder unterschiedlichen Linienarten versehen sein, wodurch die Striche leicht voneinander unterschieden werden können.

Insbesondere kann das Referenzzeichen durch Malen, Prägung oder Gravieren herstellt werden. Es ist auch möglich, dass das Referenzzeichen durch ein anderes Verfahren hergestellt werden kann.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine perspektivische Schnittansicht einer Reibungskupplung gemäß einem ersten Ausführungsbeispiel der Erfindung,
Fig. 2: eine schematische Darstellung der Reibungskupplung aus Fig. 1, wobei die Reibungskupplung sich in einem Neuzustand befindet,
Fig. 3: eine schematische Darstellung der Reibungskupplung aus Fig. 1, wobei die Reibungskupplung sich in einem maximalen Verschleißzustand befindet,
Fig. 4: eine schematische Darstellung einer Reibungskupplung gemäß einem zweiten Ausführungsbeispiel der Erfindung, wobei die Reibungskupplung sich in einem Neuzustand befindet, und
Fig. 5: eine schematische Darstellung der Reibungskupplung aus Fig. 4, wobei die Reibungskupplung sich in einem Verschleißzustand befindet.

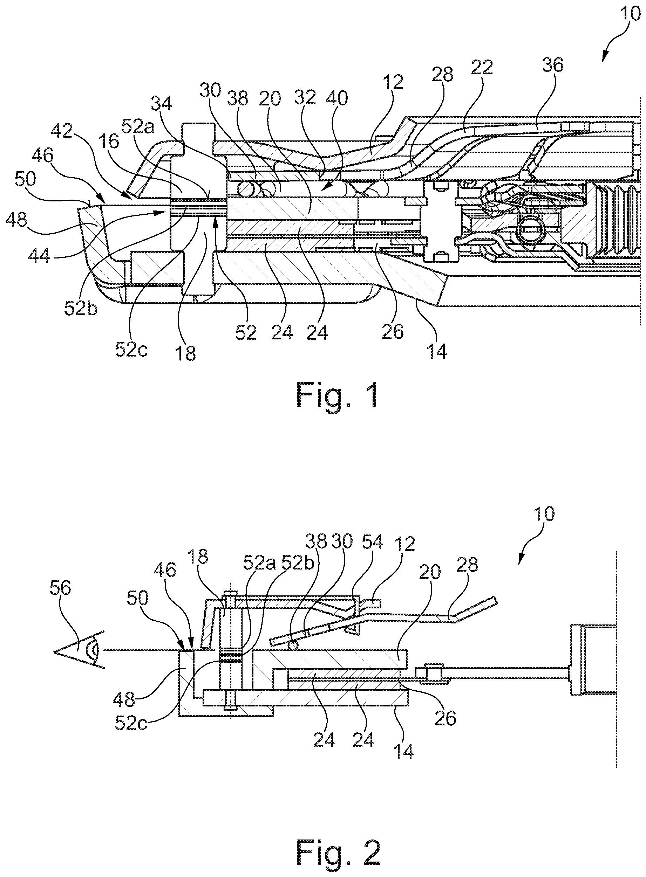

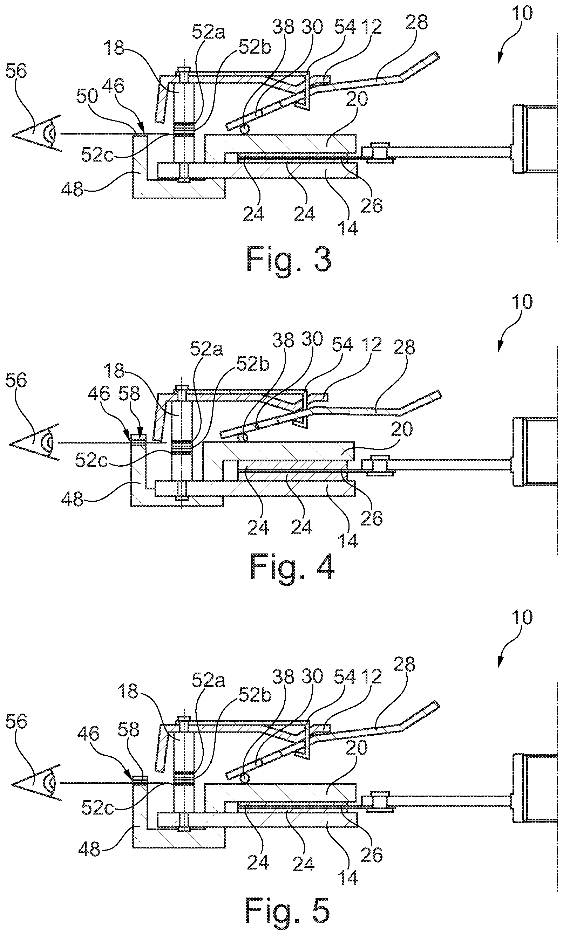

Fig. 1 Fig. 1 zeigt eine perspektivische Schnittansicht einer Reibungskupplung 10 gemäß einem ersten Ausführungsbeispiel der Erfindung. Die Reibungskupplung 10 weist einen Kupplungsdeckel 12 und eine Gegenplatte 14 auf, wobei der Kupplungsdeckel 12 durch ein Abstandselement 16 an der Gegenplatte 14 befestigt ist. In diesem Ausführungsbeispiel ist das Abstandselement 16 als Abstandsbolzen 18 ausgestaltet und an dem Kupplungsdeckel 12 und der Gegenplatte 14 vernietet. Wie in Fig. 1 gezeigt, ist eine Anpressplatte 20 zwischen dem Kupplungsdeckel 12 und der Gegenplatte 14 angeordnet. Die Anpressplatte 18 kann mit Hilfe von einem an dem Kupplungsdeckel 12 kippbar gelagerten Betätigungselement 22 auf die Gegenplatte 14 bewegt werden, um eine mit Reibbelägen 24 versehene Kupplungsscheibe 26 zwischen der Anpressplatte 20 und der Gegenplatte 14 zum Schließen der Reibungskupplung 10 zu verpressen. In diesem Ausführungsbeispiel ist das Betätigungselement 22 als Tellerfeder 28 ausgebildet. Die Tellerfeder 28 weist einen Kraftrand 30 auf, der radial innen durch ein Innenende 32 und radial außen durch ein Außenende 34 begrenzt ist. Von dem Innenende 32 können mehrere Hebelstücke 36 nach radial innen abstehen, um eine von einer Betätigungseinrichtung (nicht dargestellt) bereitgestellte Betätigungskraft in den Kraftrand 30 einzuleiten. Der Kraftrand 30 der Tellerfeder 28 ist durch ein ringförmiges als geschlossener Drahtring 38 ausgestaltetes Schwenkelement 40 an der Anpressplatte 20 angeordnet. Zum Überprüfen eines Verschleißzustandes der Kupplungsscheibe 26 weist die Reibungskupplung 10 eine Prüfeinrichtung 42 auf, die mit einem Referenzzeichen 44 und einem Prüfzeiger 46 versehen ist. Wie in Fig. 1 gezeigt ist die Anpressplatte 20 mit einem in Axialrichtung der Reibungskupplung 10 abstehenden Außenabschnitt 48 versehen, der außerhalb des Kupplungsdeckels 12 sich befindet und ein freies Ende 50 aufweist. In diesem Ausführungsbeispiel ist das freie Ende 50 als Prüfzeiger 46 ausgestaltet. Wie in Fig. 1 gezeigt weist das Referenzzeichen 44 in diesem Ausführungsbeispiel drei Striche 52a, 52b, 52c auf, die an dem Abstandsbolzen 18 aufgebracht sind. Die Zusammenarbeit von dem Prüfzeiger 46 und den Strichen 52a, 52b, 52c wird anhand von Fign. 2 und 3 noch näher erläutert.

Fig. 2 zeigt eine schematische Darstellung der Reibungskupplung 10 aus Fig. 1, wobei die Reibungskupplung 10 sich in einem Neuzustand befindet. Wie in Fig. 2 gezeigt ist die Tellerfeder 28 durch ein Lagerelement 54 an dem Kupplungsdeckel 12 kippbar gelagert. Zum reibschlüssigen Verpressen der Kupplungsscheibe 26 zwischen der Gegenplatte 14 und der Anpressplatte 20 wird die Anpressplatte 20 im Schließvorgang der Reibungskupplung 10 von der Tellerfeder 28 nach unten zu der Gegenplatte 14 gedrückt. In diesem Schließvorgang wird der Außenabschnitt 48 mit der Anpressplatte 20 zusammen in Axialrichtung relativ zu dem Abstandsbolzen 18 nach unten bis zu einer geschlossenen Situation der Reibungskupplung 10 bewegt. In der geschlossenen Situation zeigt der aus dem freien Ende 50 des Außenabschnittes 48 ausgestaltete Prüfzeiger 46 auf den obersten Strich 52a. Wie in Fig. 2 gezeigt stehen in der geschlossenen Situation der unverschlissenen Reibungskupplung 10 das freie Ende 50 des Außenabschnittes 48 der Anpressplatte 20 und der obersten Strich 52a auf der gleichen Höhe. Dies kann beispielsweise von menschlichen Augen 56 von außen der zusammengebauten Reibungskupplung 10 visuell überprüft werden. In dieser Situation werden die Striche 52b, und 52c von dem Außenabschnitt 48 der Anpressplatte 20 zugedeckt und man kann nur den obersten Strich 52a gerade über das Ende 50 des Außenabschnittes 48 von außen der Reibungskupplung 10 visuell aufnehmen. Dadurch kann der Neuzustand der Kupplungsscheibe 26 ohne Auseinandernehmen der Reibungskupplung 10 von außen visuell ermittelt werden.

Fig. 3 zeigt eine schematische Darstellung der Reibungskupplung 10 aus Fig. 1, wobei die Reibungskupplung 10 sich in einem maximalen Verschleißzustand befindet. Die Reibungskupplung 10 der Fig. 3 entspricht im Wesentlichen der Reibungskupplung 10 der Fig. 2, sodass hier nur auf die Unterschiede eingegangen wird. Im Vergleich zu der Reibungskupplung 10 aus Fig. 2 befindet sich die in Fig. 3 gezeigte Reibungskupplung 10 in einem maximalen Verschleißzustand. In der geschlossenen Situation der maximalen verschlissenen Reibungskupplung 10 zeigt der aus dem freien Ende 50 des Außenabschnittes 48 ausgestaltete Prüfzeiger 46 auf den untersten Strich 52c. Wie in Fig. 3 gezeigt stehen in der geschlossenen Situation der maximalen verschlissenen Reibungskupplung 10 das freie Ende 50 des Außenabschnittes 48 der Anpressplatte 20 und der untersten Strich 52c auf der gleichen Höhe. Dies kann beispielsweise von menschlichen Augen 56 von außen der zusammengebauten Reibungskupplung 10 visuell überprüft werden. In dieser Situation können alle drei Striche 52a, 52b, und 52c von außen der Reibungskupplung 10 visuell aufgenommen werden. Dadurch kann der maximale Verschleißzustand der Kupplungsscheibe 26 ohne Auseinandernehmen der Reibungskupplung 10 von außen visuell ermittelt werden.

Wenn die Kupplungsscheibe 26 verschlissen wird und noch nicht den maximalen Verschleißzustand erreicht, zeigt der aus dem freien Ende 50 des Außenabschnittes 48 ausgestaltete Prüfzeiger 46 in der geschlossenen Situation der Reibungskupplung 10 auf eine Stelle zwischen dem obersten Strich 52a und dem untersten Strich 52c. In dem Ausführungsbeispiel aus Fig. 2 oder 3 ist ein zwischen den Strichen 52a und 52c angeordneter mittlerer Strich 52b dargestellt, der einem mittleren Zwischenzustand zwischen dem Neuzustand und dem maximalen Verschleißzustand der Kupplungsscheibe 26 zugeordnet ist. Es ist auch möglich weitere Striche zur Bildung einer Verschleißskala zwischen dem obersten Strich 52a und dem untersten Strich 52c einzusetzen.

Fig. 4 zeigt eine schematische Darstellung einer Reibungskupplung 10 gemäß einem zweiten Ausführungsbeispiel der Erfindung, wobei die Reibungskupplung 10 sich in einem Neuzustand befindet. Wie in Fig. 4 gezeigt ist die Tellerfeder 28 durch ein Lagerelement 54 an dem Kupplungsdeckel 12 kippbar gelagert. Zum reibschlüssigen Verpressen der Kupplungsscheibe 26 zwischen der Gegenplatte 14 und der Anpressplatte 20 wird die Anpressplatte 20 im Schließvorgang der Reibungskupplung 10 von der Tellerfeder 28 nach unten zu der Gegenplatte 14 gedrückt. In diesem Schließvorgang wird der Außenabschnitt 48 mit der Anpressplatte 20 zusammen in Axialrichtung relativ zu dem Abstandsbolzen 18 nach unten bis zu einer geschlossenen Situation der Reibungskupplung 10 bewegt. In diesem Ausführungsbeispiel ist ein Prüffenster 58 in dem Außenabschnitt 48 der Anpressplatte 20 angeordnet. In der geschlossenen Situation zeigt der aus dem Prüffenster 58 ausgestaltete Prüfzeiger 46 auf den obersten Strich 52a. Wie in Fig. 4 gezeigt stehen in der geschlossenen Situation der unverschlissenen Reibungskupplung 10 das Prüffenster 58 des Außenabschnittes 48 der Anpressplatte 20 und der obersten Strich 52a auf der gleichen Höhe. Dies kann beispielsweise von menschlichen Augen 56 durch das Prüffenster 58 von außen der zusammengebauten Reibungskupplung 10 visuell überprüft werden. In dieser Situation werden die Striche 52b und 52c von dem Außenabschnitt 48 der Anpressplatte 20 zugedeckt und man kann nur den obersten Strich 52a durch das Prüffenster 58 des Außenabschnittes 48 von außen der Reibungskupplung 10 visuell aufnehmen. Dadurch kann der Neuzustand der Kupplungsscheibe 26 ohne Auseinandernehmen der Reibungskupplung 10 von ihrem Außen visuell ermittelt werden.

Fig. 5 zeigt eine schematische Darstellung der Reibungskupplung 10 aus Fig. 4, wobei die Reibungskupplung sich in einem Verschleißzustand befindet. Die Reibungskupplung 10 der Fig. 5 entspricht im Wesentlichen der Reibungskupplung 10 der Fig. 4, sodass hier nur auf die Unterschiede eingegangen wird. Im Vergleich zu der Reibungskupplung 10 aus Fig. 4 befindet sich die in Fig. 5 gezeigte Reibungskupplung 10 in einem maximalen Verschleißzustand. In der geschlossenen Situation zeigt der aus dem Prüffenster 58 ausgestaltete Prüfzeiger 46 auf den untersten Strich 52c. Wie in Fig. 5 gezeigt stehen in der geschlossenen Situation der maximalen verschlissenen Reibungskupplung 10 das Prüffenster 58 des Außenabschnittes 48 der Anpressplatte 20 und der untersten Strich 52c auf der gleichen Höhe. Dies kann beispielsweise von menschlichen Augen 56 durch das Prüffenster 58 von außen der zusammengebauten Reibungskupplung 10 visuell überprüft werden. In dieser Situation werden die Striche 52a und 52b von dem Außenabschnitt 48 der Anpressplatte 20 zugedeckt und man kann nur den untersten Strich 52c durch das Prüffenster 58 des Außenabschnittes 48 von außen der Reibungskupplung 10 visuell aufnehmen. Dadurch kann der maximale Verschleißzustand der Kupplungsscheibe 26 ohne Auseinandernehmen der Reibungskupplung 10 von ihrem Außen visuell ermittelt werden.

Wenn die Kupplungsscheibe 26 verschlissen wird und noch nicht den maximalen Verschleißzustand erreicht, zeigt der aus dem Prüffenster 58 des Außenabschnittes 48 ausgestaltete Prüfzeiger 46 in der geschlossenen Situation der Reibungskupplung 10 auf eine Stelle zwischen dem obersten Strich 52a und dem untersten Strich 52c. In dem Ausführungsbeispiel aus Fig. 4 oder 5 ist ein zwischen den Strichen 52a und 52c angeordneter mittlerer Strich 52b dargestellt, der einem mittleren Zwischenzustand zwischen dem Neuzustand und dem maximalen Verschleißzustand der Kupplungsscheibe 26 zugeordnet ist. Es ist auch möglich weitere Striche zur Bildung einer Verschleißskala zwischen dem obersten Strich 52a und dem untersten Strich 52c einzusetzen.

Da in dem Ausführungsbeispiel aus Fig. 4 oder 5 sowohl in dem Neuzustand als auch in dem mittleren oder maximalen Verschleißzustand der Kupplungsscheibe 26 nur ein Strich 52a, 52b oder 52c durch das Prüffenster 58 sichtbar ist, müssten die Striche 52a, 52b und 52c zur Identifizierung von den verschiedenen Zuständen der Kupplungsscheibe 26 unterschiedlich ausgebildet sein. Beispielsweise können die Striche 52a, 52b und 52c mit unterschiedlichen Breiten oder unterschiedlichen Linienarten versehen sein, wodurch die Striche 52a, 52b und 52c leicht voneinander unterschieden werden können.

Da in dem Ausführungsbeispiel aus Fig. 4 oder 5 sowohl in dem Neuzustand als auch in dem mittleren oder maximalen Verschleißzustand der Kupplungsscheibe 26 nur ein Strich 52a, 52b oder 52c durch das Prüffenster 58 sichtbar ist, müssten die Striche 52a, 52b und 52c zur Identifizierung von den verschiedenen Zuständen der Kupplungsscheibe 26 unterschiedlich ausgebildet sein. Beispielsweise können die Striche 52a, 52b und 52c mit unterschiedlichen Breiten oder unterschiedlichen Linienarten versehen sein, wodurch die Striche 52a, 52b und 52c leicht voneinander unterschieden werden können.

### Bezugszeichenliste

- 10: Reibungskupplung
- 12: Kupplungsdeckel
- 14: Gegenplatte
- 16: Abstandselement
- 18: Abstandsbolzen
- 20: Anpressplatte
- 22: Betätigungselement
- 24: Reibbelag
- 26: Kupplungsscheibe
- 28: Tellerfeder
- 30: Kraftrand der Tellerfeder
- 32: Innenende des Kraftrandes
- 34: Außenende des Kraftrandes
- 36: Hebelstücke der Tellerfeder
- 38: Drahtring
- 40: Schwenkelement
- 42: Prüfeinrichtung
- 44: Referenzzeichen
- 46: Prüfzeiger
- 48: Außenabschnitt der Anpressplatte
- 50: freies Ende des Außenabschnittes
- 52: Striche des Referenzzeichens
- 52a: oberster Strich des Referenzzeichens
- 52b: mittlerer Strich des Referenzzeichens
- 52c: unterster Strich des Referenzzeichens
- 54: Lagerelement
- 56: Auge
- 58: Prüffenster

## Patentansprüche

1. Reibungskupplung zum Kuppeln einer Antriebswelle eines Kraftfahrzeugmotors mit mindestens einer Getriebeeingangwelle eines Kraftfahrzeuggetriebes mit einem Kupplungsdeckel (12),
einer an dem Kupplungsdeckel (12) befestigten Gegenplatte (14),
einer relativ zur Gegenplatte (14) axial verlagerbaren Anpressplatte (20) zum reibschlüssigen Verpressen einer Kupplungsscheibe (26) zwischen der Gegenplatte (14) und der Anpressplatte (20),
einem an dem Kupplungsdeckel (12) kippbar gelagerten Betätigungselement (22) zur Verlagerung der Anpressplatte (20) und
einer ein Referenzzeichen (44) und einen Prüfzeiger (46) aufweisenden Prüfeinrichtung (42) zum Überprüfen des Verschleißzustandes der Kupplungsscheibe (26),
wobei der Verschleißzustand der Kupplungsscheibe (26) mit Hilfe der Prüfeinrichtung (42) von außen der zusammengebauten Reibungskupplung (10) visuell überprüfbar ist,
**dadurch gekennzeichnet, dass** das Referenzzeichen (44) an der Gegenplatte (14) angeordnet ist, oder dass die Gegenplatte (14) durch ein Abstandselement (16) an dem Kupplungsdeckel (12) befestigt ist, wobei das Referenzzeichen (44) an dem Abstandselement (16) angeordnet ist.

2. Reibungskupplung nach Anspruch 1, **dadurch gekennzeichnet, dass** das Referenzzeichen (44) aus mehreren in Axialrichtung voneinander beabstandeten Strichen (52, 52a, 52b, 52c) ausgebildet ist, wobei die Striche (52, 52a, 52b, 52c) jeweils einem Zustand der Kupplungsscheibe (26) zugeordnet sind.

3. Reibungskupplung nach Anspruch 1 oder 2, **dadurch gekennzeichnet, dass** das Referenzzeichen (44) einen Strich (52c) aufweist, der einem maximalen Verschleißzustand der Kupplungsscheibe (26) zugeordnet ist.

4. Reibungskupplung nach einem der Ansprüche 1 bis 3, **dadurch gekennzeichnet, dass** die Anpressplatte (20) mit einem in Axialrichtung der Reibungskupplung (10) abstehenden Außenabschnitt (48) versehen ist, der sich außerhalb des Kupplungsdeckels (12) befindet, wobei der Prüfzeiger (46) an dem Außenabschnitt (48) der Anpressplatte (20) angeordnet ist.

5. Reibungskupplung nach Anspruch 4, **dadurch gekennzeichnet, dass** der Außenabschnitt (48) der Anpressplatte (20) ein freies Ende (50) aufweist, wobei das freies Ende (50) als Prüfzeiger (46) ausgestaltet ist.

6. Reibungskupplung nach Anspruch 4, **dadurch gekennzeichnet, dass** der Prüfzeiger (46) als Prüffenster (58) ausgebildet ist, wobei das Prüffenster (58) in dem Außenabschnitt (48) der Anpressplatte (20) angeordnet ist.

7. Reibungskupplung nach einem der Ansprüche 1 bis 6, **dadurch gekennzeichnet, dass** das Referenzzeichen (44) durch Malen, Prägung oder Gravieren herstellbar ist.

## Claims

1. Friction clutch for coupling a drive shaft of a motor vehicle engine to at least one transmission input shaft of a motor vehicle transmission having
a clutch cover (12),
a counter-plate (14) which is fastened to the clutch cover (12),
a pressure plate (20) which can be moved axially relative to the counter-plate (14) for pressing a clutch plate (26) in a frictionally locking manner between the counter-plate (14) and the pressure plate (20),
an actuating element (22) which is mounted such that it can be tilted on the clutch cover (12) for moving the pressure plate (20), and
a testing device (42) which has a reference mark (44) and a test indicator (46) for testing the wear state of the clutch plate (26),
it being possible for the wear state of the clutch plate (26) to be tested visually from outside the assembled friction clutch (10) with the aid of the testing device (42),
**characterized in that** the reference mark (44) is arranged on the counter-plate (14), or **in that** the counter-plate (14) is fastened to the clutch cover (12) by way of a spacer element (16), the reference mark (44) being arranged on the spacer element (16).

2. Friction clutch according to Claim 1, **characterised in that** the reference mark (44) is configured from a plurality of lines (52, 52a, 52b, 52c) which are spaced apart from one another in the axial direction, the lines (52, 52a, 52b, 52c) being assigned to in each case one state of the clutch plate (26).

3. Friction clutch according to Claim 1 or 2, **characterized in that** the reference mark (44) has a line (52c) which is assigned to a maximum wear state of the clutch plate (26).

4. Friction clutch according to one of Claims 1 to 3, **characterized in that** the pressure plate (20) is provided with an outer section (48) which projects in the axial direction of the friction clutch (10) and is situated outside the clutch cover (12), the test indicator (46) being arranged on the outer section (48) of the pressure plate (20).

5. Friction clutch according to Claim 4, **characterized in that** the outer section (48) of the pressure plate (20) has a free end (50), the free end (50) being configured as a test indicator (46).

6. Friction clutch according to Claim 4, **characterized in that** the test indicator (46) is configured as a test window (58), the test window (58) being arranged in the outer section (48) of the pressure plate (20).

7. Friction clutch according to one of Claims 1 to 6, **characterized in that** the reference mark (44) can be produced by way of painting, embossing or engraving.

## Revendications

1. Embrayage à friction destiné au couplage d'un arbre d'entraînement d'un moteur de véhicule à moteur, doté d'au moins un arbre d'entrée de transmission d'une transmission de véhicule à moteur, avec un couvercle d'embrayage (12),
une contre-plaque (14) fixée sur le couvercle d'embrayage (12),
une plaque de pression (20) déplaçable axialement relativement à la contre-plaque (14) destinée au pressage créant une friction d'un disque d'embrayage (26) entre la contre-plaque (14) et la plaque de pression (20),
un élément d'actionnement (22) disposé de manière basculable sur le couvercle d'embrayage (12) pour le déplacement de la plaque de pression (20), et
un dispositif de contrôle (42) comportant un signe de référence (44) et un pointeur de contrôle (46) destiné à contrôler l'état d'usure du disque d'embrayage (26), dans lequel l'état d'usure du disque d'embrayage (26) est visuellement contrôlable depuis l'extérieur de l'embrayage à friction (10) à l'aide du dispositif de contrôle (42),
**caractérisé en ce que** le signe de référence (44) est agencé sur la contre-plaque (14), ou **en ce que** la contre-plaque (14) est fixée sur le couvercle d'embrayage (12) par un élément d'écartement (16), dans lequel le signe de référence (44) est agencé sur l'élément d'écartement (16).

2. Embrayage à friction selon la revendication 1, **caractérisé en ce que** le signe de référence (44) est constitué de plusieurs traits (52, 52a, 52b, 52c) espacés l'un par rapport à l'autre dans la direction axiale, dans lequel les traits (52, 52a, 52b, 52c) sont respectivement ordonnés à un état du disque d'embrayage (26).

3. Embrayage à friction selon la revendication 1 ou 2, **caractérisé en ce que** le signe de référence (44) comporte un trait (52c), lequel est ordonné à un état d'usure maximal du disque d'embrayage (26).

4. Embrayage à friction selon l'une des revendications 1 à 3, **caractérisé en ce que** la plaque de pression (20) est prévue dotée d'une section extérieure (48) écartée dans la direction axiale de l'embrayage à friction (10), se trouvant à l'extérieur du couvercle d'embrayage (12), dans lequel le pointeur de contrôle (46) est agencé sur la section extérieure (48) de la plaque de pression (20).

5. Embrayage à friction selon la revendication 4, **caractérisé en ce que** la section extérieure (48) de la plaque de pression (20) comporte une extrémité libre (50), dans lequel l'extrémité libre (50) est conçue comme pointeur de contrôle (46).

6. Embrayage à friction selon la revendication 4, **caractérisé en ce que** le pointeur de contrôle (46) est conçu comme fenêtre de contrôle (58), dans lequel la fenêtre de contrôle (58) est agencée dans la section extérieure (48) de la plaque de pression (20).

7. Embrayage à friction selon l'une des revendications 1 à 6, **caractérisé en ce que** le signe de référence (44) peut être obtenu par peinture, estampage ou gravure.
